# EUROPEAN PATENT SPECIFICATION

(11) **EP 0 983 817 B1**
(45) Date of publication and mention of the grant of the patent: **23.04.2003**
(21) Application number: 99115718.1
(22) Date of filing: 10.08.1999
(51) Int. Cl.: B23K 9/32, B23K 9/167

(54) **Centralised coupling designed to connect torch power cable to a mig-welder generator**
Zusammengezogene Kopplung zum Verbinden eines Schweissbrenners mit einem MIG-Schweissgenerator
Couplage centralisé permettant la connexion d'un câble d'une torche avec un générateur de courant MIG

(30) Priority: 04.09.1998 IT VI980068
(43) Date of publication of application: 08.03.2000
(73) Proprietor: TRAFIMET S.P.A., 36020 Castegnero (VI) (IT)
(72) Inventor: Zigliotto, Giuseppe, 36023 Longare VI (IT)
(74) Representative: De Gregori, Antonella

(56) References cited:
- EP-A- 0 590 728
- US-A- 5 974 917
- US-A- 6 005 221

## Description

This invention relates to a centralised coupling designed to connect the torch power cable to the generator of a MIG welder.

The coupling is characterised in that it includes a body made of insulating material, in particular plastic, which presents a through hole into which a metal connector is inserted to supply welding current, and through which the welding gas and wire are conveyed.

The coupling in accordance with the invention is characterised by the special configuration of its parts, which produces a lighter, cheaper assembly than those currently known.

In known MIG-welding machines, the torch power cable is connected to the generator by a Victaulic coupling that enables the power cable to be connected to a socket on the body of the machine to carry the welding wire, gas and welding current to the torch and send control signals to the generator.

These couplings, now in almost universal use, basically consist of a block of conductive material, generally brass or the like, which presents a set of connectors designed to be inserted in the corresponding socket on the machine on one side, and suitable connections for the wires and pipes in the torch power cable on the other.

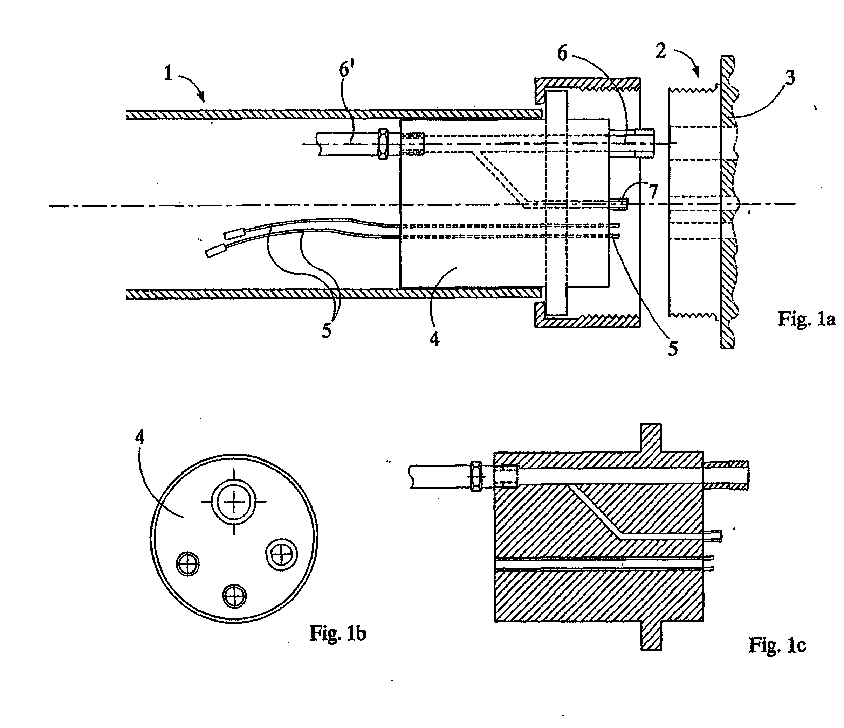

A coupling of known type will now be illustrated by reference to figures 1a, 1b and 1c, which show this coupling in side view, front view and cross-section respectively.

In figure 1a, no. 1 indicates a welding torch power cable fitted at one end with a connector for connection to socket 2 on body 3 of a welder.

The said connector basically consists of a cylindrical body 4, made, for example, of brass, into which a pair of control signal cables 5 are inserted, and which presents a pair of tubular connectors 6 and 7 on the socket side, the former being designed to receive a welding wire sheath (not illustrated) and the latter for the welding gas.

Cables 5 exit from the opposite side, and a connector 6', constituted by a hollow metal tubular element, is also present; this connector is screwed into body 4 coaxially with coupling 6, of which it constitutes an extension on the torch cable side.

The welding wire supply sheath passes through connector 6, and the gas supply pipe present in torch cable 1 is fitted onto the end of the said sheath.

Finally, a metal braid which carries the welding current from the generator to the torch is fitted to coupling 6'.

In all torches currently known, body 4 is made of metal, which means that when cables 5 are inserted, a layer of insulating material has to be inserted between the cables and the body, which makes manufacture difficult and increases the cost of the product.

The fact that body 4 is made entirely of metal also represents a considerable waste of material, which contributes to increasing the cost of the coupling as well as making the device unnecessarily heavy.

These drawbacks are now eliminated by the present invention, which offers a coupling designed to connect the torch power cable to the welder generator. The said coupling comprises a block of insulating material, in particular plastic, into which electrical connectors for control signals are inserted, and which presents a through hole into which a tubular metal connector is inserted; the said connector presents a coupling for connection to the socket on the machine on one side and a corresponding coupling for connection to the pipes and cables in the torch power cable on the other.

This configuration produces a lighter product and considerably simplifies manufacture, thus reducing the overall cost.

This invention will now be described in detail, by way of example but not of limitation, by reference to the annexed figures 2 to 8 in which:
- Figure 2 i a sectional view of a coupling in accordance with the invention, assembled
- Figures 3 and 4 show the two elements that make up the coupling in accordance with the invention, dismantled
- Figures 5 to 8 show the cross-section and front view respectively of the elements illustrated in figures 3 and 4

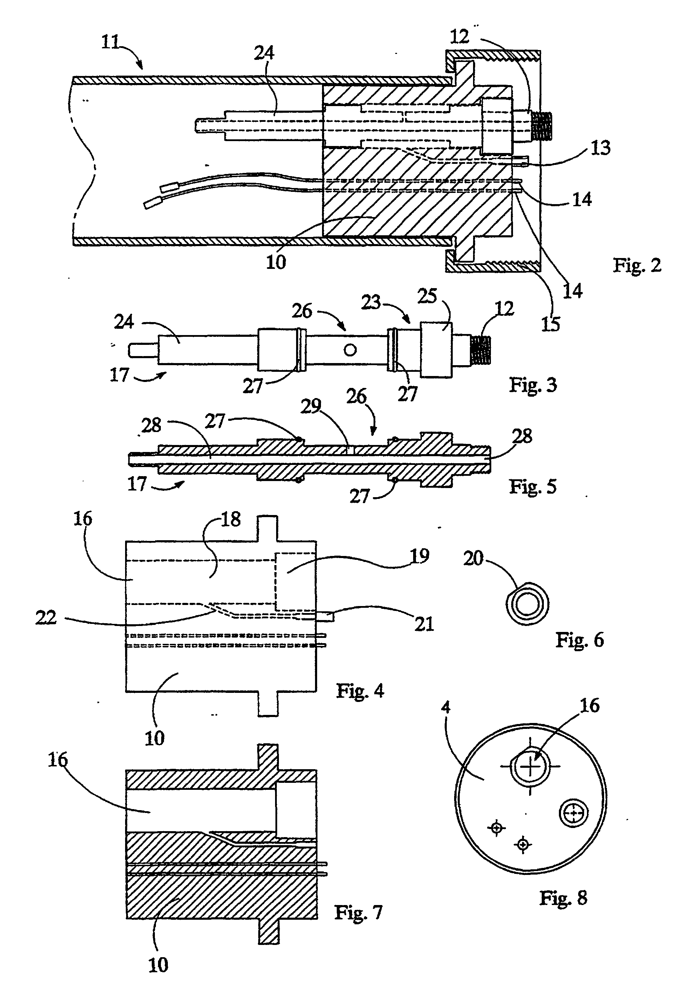

By reference to figure 2, the coupling in accordance with the invention basically comprises a body 10 inserted into a handgrip 11. The said body is attached to one end of the welder power cable and presents a set of connections suitable for coupling to socket 2 of the machine on one side.

These connections comprise a tubular current supply connector 12, a gas supply tube 13 and a pair of plugs 14 for the control signals. The handgrip also presents a threaded ring nut 15 for connection to socket 2.

In accordance with the invention, body 10 is made of insulating material, in particular a plastic such as nylon or the like, and contains a through hole 16 (figures 7 and 8) into which a conductor element shown as 17 in figures 3 and 5 is inserted.

Through hole 16 presents a circular first section, shown as 18 in figure 4, and a second section 19 of larger diameter, the profile of which presents a flat segment shown as no. 20 in figure 8.

Body 10 is integral with a tubular element 21 which communicates via a pipe 22 with the central part of hole 16.

Electrical connectors 14 are embedded in body 10, and fitted on the opposite side with couplings of known type for connection to control signal cables leading to the torch.

Element 17, designed to be inserted into hole 16, presents (figure 3) a basically cylindrical central body 23 which has the same dimensions as section 18 of hole 16, a shank 24 which projects from body 10 towards the power cable when assembly is finished, and finally coupling 12, which projects from body 10 on the side of the coupling to the machine when assembled.

Central part 23 of element 17 presents a ring-shaped groove 26 in the middle, demarcated at the ends by a pair of seals 27.

Element 17 presents an axial hole 28; a second, radial hole 29 places axial hole 28 in communication with the space formed by ring-shaped groove 26.

Element 17 can be made in one piece, or shank 24 can be separate and screwed to body 17 to facilitate repair and/or replacement operations.

For the purpose of assembly, element 17 is inserted into hole 16 in such a way that central part 23 is positioned in correspondence with constant-diameter section 18 of the hole, and head 25 is inserted into the second section 19.

In this position, tubular element 21 is in communication, via pipe 22, with ring-shaped groove 26, and therefore, through hole 29, with axial hole 28 in element 17.

Shank 24 projects from body 10.

When the assembly is connected to the torch power cable, electrical connectors 14 are connected to the wires that carry the control signals; the gas supply pipe in torch cable 1 is fitted onto shank 24 of element 17, and the copper braid that carries the welding current, which is also present in torch cable 1, is wound onto shank 24 and secured with a clip or similar known system.

The sheath through which the welding wire is supplied is also passed through body 17, along axial hole 28.

During use, the welding current is supplied through element 17, which is made of metal and has a sufficient cross-section to ensure good electrical conduction. The gas is supplied through tube 13, from which it is conveyed along pipe 22 to ring-shaped grove 26, and then through hole 29 to axial hole 28, where it enters the supply pipe leading to the torch.

The welding wire passes through the same pipe, after being fed along the sheath in hole 28.

This system produces a small, light, cheap coupling because body 10 is made of plastic, which is inexpensive and easy to process and can be produced by moulding; equally, as body 10 is made of insulating material, electrical connectors 14 can merely be inserted into it, with no need to add a layer of insulating material as in the case of known metal couplings.

The dimensions and the materials used can obviously vary in accordance with practical requirements.

## Claims

1. Coupling designed for connecting a welding torch power cable to the socket on a MIG welder generator, of the type comprising:
• a body (10) connectable to one end of the power cable (1) and fitted with a tubular conductor (17) for the passage of welding current, which said conductor projects from both sides of the said body (10), and presents an axial hole (28)
• a gas supply connector (13) which communicates with the said axial hole in the said tubular conductor (17), and
• electrical connectors (14) for machine control signals if required **characterised in that** the said body (10) is made of insulating material, in particular plastic, and that the said tubular conductor (17) which supplies the welding current is inserted into a through hole (16) in the said body (10).

2. Coupling in accordance with claim 1, **characterised in that** the said tubular conductor (17) is connected via a pipe (22) inside the said body (10) to the said gas supply connector (13).

3. Coupling as claimed in claim 2, **characterised in that** the said tubular coupling (17) inserted into the said body (10) presents a ring-shaped groove (26) which forms a ring-shaped chamber to which pipe (22) leads from the said gas supply connector (13), the said tubular conductor (17) presenting a radial hole (29) which places the said ring-shaped chamber (26) in communication with the axial hole (28) in the said conductor (17).

4. Coupling as claimed in each of the preceding claims, **characterised in that** the sheath designed for the passage of the welding wire is insert into the axial hole (28) in the said conductor (17).

5. Coupling as claimed in the preceding claims, **characterised in that** it comprises one or more electrical connectors (14, 15) for control signals, the said connectors being directly embedded in the plastic body (10).

## Patentansprüche

1. Kupplung zum Anschluß des Stromkabels eines Schweißbrenners an die Buchse eines MIG-Schweißgenerators mit
mit einem Ende des Stromkabels (1) verbundenen Körper (10), der mit einem an seinen beiden Seiten herausragenden und eine Axialbohrung (28) aufweisenden Rohrleiter (17) zum Durchgang von Schweißstrom versehen ist,
einem Gasversorgungsanschluß (13), der mit der Axialbohrung in dem Rohrleiter (17) in Verbindung steht, und
elektrischen Anschlüssen (14) für gegebenenfalls erforderliche Maschinensteuersignale,
**dadurch gekennzeichnet, daß** der Körper (10) aus Isoliermaterial, insbesondere Kunststoff, besteht und der den Schweißstrom führende Rohrleiter (17) in eine Durchgangsbohrung (16) des Körpers (10) eingesetzt ist.

2. Kupplung nach Anspruch 1, **dadurch gekennzeichnet, daß** der Rohrleiter (17) über ein Rohr (22) im Innern des Körpers (10) mit dem Gasversorgungsanschluß (13) verbunden ist.

3. Kupplung nach Anspruch 2, **dadurch gekennzeichnet, daß** der in den Körper (10) eingerührte Rohrleiter (17) eine Ringnut (26) zur Ausbildung einer ringförmigen Kammer, in die das Rohr (22) von dem Gasversorgungsanschluß (13) führt, sowie eine Radialbohrung (29) aufweist, die den Ringraum (26) in Verbindung mit der Axialbohrung (28) in den Leiter (17) bringt.

4. Kupplung nach einem der vorhergehenden Ansprüche, **dadurch gekennzeichnet, daß** in die Axialbohrung (28) des Leiters (17) eine Hülse zur Durchführung des Schweißdrahtes eingesetzt ist.

5. Kupplung nach einem der vorhergehenden Ansprüche, **dadurch gekennzeichnet, daß** sie für Steuersignale ein oder mehrere in den Kunststoffkörper (10) unmittelbar eingebettete elektrische Anschlüsse (14, 15) aufweist.

## Revendications

1. Couplage conçu pour connecter un câble d'alimentation de torche de soudage à la prise d'un générateur de machine à souder MIG du type comprenant :
- un corps (10) pouvant être connecté à une extrémité du câble d'alimentation (1) et adapté à un conducteur tubulaire (17) pour le passage de courant de soudage, lequel dit conducteur se projette à partir des deux côtés dudit corps (10), et présente un trou axial (28) ;
- un connecteur d'alimentation en gaz (13) qui communique avec ledit trou axial dans ledit conducteur tubulaire (17) ; et
- des connecteurs électriques (14) pour signaux de commande numérique si nécessaire, **caractérisés en ce que** ledit corps (10) est fait d'une matière isolante, en particulier, de matière plastique, et **en ce que** ledit conducteur tubulaire (17), qui alimente le courant de soudage, est inséré dans un trou traversant (16) dans ledit corps (10) .

2. Couplage selon la revendication 1, **caractérisé en ce que** ledit conducteur tubulaire (17) est connecté par l'intermédiaire d'une canalisation (22) à l'intérieur dudit corps (10) audit connecteur d'alimentation en gaz (13).

3. Couplage selon la revendication 2, **caractérisé en ce que** ledit couplage tubulaire (17) inséré dans ledit corps (10) présente une rainure en forme d'anneau (26) qui forme une chambre en forme d'anneau vers laquelle la canalisation (22) conduit à partir dudit connecteur d'alimentation en gaz (13), ledit conducteur tubulaire (17) présentant un trou radial (29) qui place ladite chambre en forme d'anneau (26) en communication avec le trou axial (28) dans ledit conducteur (17).

4. Couplage selon l'une quelconque des revendications précédentes, **caractérisé en ce que** la gaine conçue pour le passage du câble de soudage est insérée dans le trou axial (28) dans ledit conducteur (17).

5. Couplage selon l'une quelconque des revendications précédentes, **caractérisé en ce qu'**il comprend un ou plusieurs connecteurs électriques (14, 15) pour signaux de commande, lesdits connecteurs étant directement incorporés dans le corps de matière plastique (10).
